# EUROPÄISCHE PATENTANMELDUNG

(11) **EP 2 375 013 A2**
(43) Veröffentlichungstag der Anmeldung: **12.10.2011**
(21) Anmeldenummer: 11158621.0
(22) Anmeldetag: 17.03.2011
(51) Int. Cl.: F01K 13/00, F22B 35/00

(54) **Verfahren zur Wärmerückintegration aus einem Rauchgasstrom gewonnener thermischer Energie**

(30) Priorität: 31.03.2010 DE 102010013736; 02.07.2010 DE 102010030909
(71) Anmelder: Hitachi Power Europe GmbH, 47059 Duisburg (DE)
(72) Erfinder: Stöver, Brian, 45665 Recklinghausen (DE); Steinmetz, Christian, 45359 Essen (DE); Bergins, Christian. Dr.-Ing., 45711 Datteln (DE); Joormann, Marinus, 45147 Essen (DE)
(74) Vertreter: Viering, Jentschura & Partner

(57) **Zusammenfassung**

Bei einem Verfahren zur Rückintegration von aus dem Rauchgasstrom (2) eines mit kohlenstoffhaltigem Brennstoff, insbesondere Trockenbraunkohle oder Steinkohle, befeuerten und im Oxyfuel-Betrieb gefahrenen Dampfkessels (1) eines Kraftwerks gewonnener thermischer Energie in den Wasser/Dampf-Kreislauf des Kraftwerks, wobei aus dem Rauchgasstrom ein erster, den kohlenstoffhaltigen Brennstoff aufnehmender Teilstrom (7) abgezweigt und zu den Brennern des Dampfkessels rezirkuliert wird und ein zweiter Teilstrom (10) abgezweigt und unter Durchströmen einer vorzugsweise im Gegenstrom von zumindest Teilen des Rauchgasstroms durchströmten Wärmeübertragungsvorrichtung (3) zu den Brennern des Dampfkessels rezirkuliert wird, soll eine Lösung geschaffen werden, die eine verbesserte Ausnutzung der beim Oxyfuel-Betrieb eines fossil befeuerten Dampfkessels entstehenden thermischen Energie ermöglicht. Dies wird dadurch erreicht, dass aus einem Teilstrom (13) des Rauchgasstroms (2) thermische Energie in Form eines Teilwärmestroms ausgekoppelt und im Bereich der Hochdruckvorwärmung und/oder der Niederdruckvorwärmung in den Wasser/Dampf-Kreislauf des Kraftwerks eingekoppelt wird.

## Beschreibung

Die Erfindung richtet sich auf ein Verfahren zur Rückintegration von aus dem Rauchgasstrom eines mit kohlenstoffhaltigem Brennstoff, insbesondere Kohle, vorzugsweise Trockenbraunkohle oder Steinkohle, befeuerten und im Oxyfuel-Betrieb gefahrenen Dampfkessels eines Kraftwerks gewonnener thermischer Energie in den Wasser/Dampf-Kreislauf des Kraftwerks, wobei aus dem Rauchgasstrom ein erster, den kohlenstoffhaltigen Brennstoff aufnehmender Teilstrom abgezweigt und zu den Brennern des Dampfkessels rezirkuliert wird und ein zweiter Teilstrom abgezweigt und unter Durchströmen einer vorzugsweise im Gegenstrom von zumindest Teilen des Rauchgasstroms durchströmten Wärmeübertragungsvorrichtung zu den Brennern des Dampfkessels rezirkuliert wird.

Seit geraumer Zeit, spätestens seit Unterzeichnung des Kyoto-Protokolls, werden intensive Anstrengungen unternommen, um die Emission des bei der Verbrennung fossiler Brennstoffe entstehenden Gases CO₂ in die Atmosphäre zu vermindern, um dieses für die Klimaerwärmung verantwortliche Treibhausgas in der Atmosphäre zu reduzieren. Bei fossil befeuerten, insbesondere kohlebefeuerten, Kraftwerken steht hierbei als eine Verfahrensroute die integrierte Abscheidung des CO₂ zur Verfügung. Diese integrierte Abscheidung wird beim so genannten Oxyfuel-Prozess realisiert. Hierbei wird ein hochkonzentrierter Kohlendioxid(CO₂)Abgasstrom durch die Verbrennung des fossilen Brennstoffs, insbesondere Kohle, mit reinem Sauerstoff anstelle von Luft erzeugt, der nach Kondensation des Wasserdampfanteils ohne zusätzliche Wäsche direkt entsorgt werden kann.

Die Oxyfuel-Fahrweise eines Dampfkessels eines Kraftwerkes ist im Vergleich mit einem üblichen, mit Luftverbrennung betriebenen Kraftwerk hinsichtlich seines Wirkungsgrades vermindert. Es wird daher nach den verschiedensten Wegen gesucht, mit welchen sich bei einem im Oxyfuel-Betrieb gefahrenen Dampfkessel eines Kraftwerkes eine Wirkungsgraderhöhung erzielen lässt. Auch ist in dem Falle, dass ein solches Kraftwerk mit einer integrierten CO₂-Abscheidung ausgestattet ist, ein zusätzlicher energetischer Aufwand für die CO₂-Kompression zur Verflüssigung des Kohlendioxids notwendig.

Der Erfindung liegt daher die Aufgabe zugrunde, eine Lösung zu schaffen, die eine verbesserte Ausnutzung der beim Oxyfuel-Betrieb eines fossil befeuerten Dampfkessels entstehenden thermischen Energie ermöglicht.

Bei einem Verfahren der eingangs näher bezeichneten Art wird diese Aufgabe erfindungsgemäß dadurch gelöst, dass dem Rauchgasstrom und/oder aus einem Teilstrom des Rauchgasstroms thermische Energie in Form eines Teilwärmestroms ausgekoppelt und im Bereich der Hochdruckvorwärmung und/oder der Niederdruckvorwärmung in den Wasser/Dampf-Kreislauf des Kraftwerks eingekoppelt wird.

Hierdurch ist es möglich, Dampf einzusparen, der ansonsten üblicherweise der Hochdruck- Mitteldruckturbine und/oder Niederdruckturbine des Wasser/Dampf-Kreislaufes entnommen und der Hochdruck- und/oder Niederdruck-orwärmung des Wasser/Dampf-Kreislaufes zugeführt wird. Durch diese Rückführung von thermischer Energie aus dem Rauchgasstrom in den Bereich der Niederdruck- und/oder Hochdruck-Vorwärmung des Wasser/Dampf-Kreislaufes des Kraftwerkes muss innerhalb des Wasser/Dampf-Kreislaufes weniger Dampf ausgekoppelt werden, so dass sich dadurch der gesamte Wirkungsgrad des Kraftwerkes erhöhen lässt. Es ist aber auch möglich, den dadurch "eingesparten" Dampf an anderer Stelle des Kraftwerkes, beispielsweise für die Luftzerlegung in der Luftzerlegungsanlage zur Erzeugung des beim Oxyfuel-Betrieb benötigten Sauerstoffs zu verwenden, so dass an dieser Stelle dann eine entsprechende Energiezufuhr eingespart wird.

Eine besonders günstige Ausgestaltung der Erfindung besteht darin, dass von dem Rauchgasstrom ein die Wärmeübertragungsvorrichtung umströmender und in Strömungsrichtung des Rauchgases hinter der Wärmeübertragungsvorrichtung wieder in den Rauchgasstrom einmündender Bypass-Strom abgezweigt wird, wobei der Bypass-Strom eine zweite Wärmeübertragungsvorrichtung durchströmt, mittels welcher der Teilstrom thermischer Energie aus dem Bypass-Strom ausgekoppelt und in ein Wärmeträgermedium eingekoppelt wird, das dem Bereich der Hochdruckvorwärmung des Wasser/Dampf-Kreislaufs zugeführt wird und dort direkt in den Wasser/Dampf-Kreislauf eingekoppelt wird oder wobei dort thermische Energie aus dem Wärmeträgermedium ausgekoppelt und in den Wasser/Dampf-Kreislauf eingekoppelt wird.

Für eine etwa gleiche adiabate Flammentemperatur müssen bei steinkohlegefeuerten Kraftwerken mit CO₂-Abscheidung und einer Fahrweise im Oxyfuel-Betrieb ca. 2/3 des Rauchgases rezirkuliert werden. Damit der im Abgasstrom angeordnete Gasvorwärmer, der bei konventionellem Betrieb als Luftvorwärmer ausgebildet ist, zur Vorwärmung des rezirkulierten ersten Rauchgasteilstroms benutzt werden kann, muss der aus dem Kessel austretende und in den Gasvorwärmer eintretende Rauchgasmassenstrom reduziert werden. Hierzu wird der dem Gasvorwärmer umgehende Bypass-Strom ausgebildet. Um die Rauchgastemperatur in Strömungsrichtung hinter dem Gasvorwärmer nicht zu erhöhen, befindet sich in dem Bypass-Strom als Wärmetauscher ausgebildete Wärmeübertragungsvorrichtung. Diese Wärmeübertragungsvorrichtung bzw. dieser Wärmetauscher ist als Gas/Wasser-Wärmetauscher ausgebildet, wobei das Wasser als Wärmeträgermedium dient, in welches der aus dem Bypass-Rauchgasteilstrom ausgekoppelte thermische Energie eingekoppelt und in dem Bereich der Hochdruck-Vorwärmung des Wasser/Dampf-Kreislaufs zugeführt wird. Da in dem den Gasvorwärmer durchströmenden Rauchgasstrom saure Bestandteile enthalten sind, beispielsweise Schwefel, muss die Temperatur in Rauchgasströmungsrichtung hinter dem Gasvorwärmer mindestens 10 Kelvin über dem Säuretaupunkt liegen. Dies bedingt auf der anderen Seite, dass das Temperaturniveau, mit dem das Wasser in dem Bypass-Wärmetauscher oder die Bypass-Wärmeübertragungsvorrichtung eintritt, so zu wählen ist, dass auch die Temperatur des wieder in den Rauchgasstrom einmündenden Bypass-Stroms eine solche Höhe aufweist, dass in Strömungsrichtung hinter der Einmündungsstelle das Temperaturniveau des Rauchgasstromes ebenfalls mindestens 10 Kelvin über dem Säuretaupunkt liegt. Die Temperatur des aus der Wärmeübertragungsvorrichtung bzw. der Bypass-Wärmeübertragungsvorrichtung der Hochdruck-Vorwärmung als Wärmeträgermedium zugeführten warmen Wassers ergibt sich aus der vorgegebenen mittleren logarithmischen Temperaturdifferenz der Wärmeübertragungsvorrichtung. Das erwärmte Wasser wird in die Hochdruck-Vorerwärmung des Wasser/Dampf-Kreislaufes eingebunden. Somit muss für die Hochdruck-Vorwärmung im Wasser/Dampf-Kreislauf weniger Dampf aus der Hochdruck- und/oder der Mitteldruck-Turbine bereitgestellt werden.

Eine weitere Möglichkeit der Verbesserung der Wärmebilanz eines im Oxyfuel-Betrieb gefahrenen Dampfkessels besteht gemäß Weiterbildung der Erfindung darin, dass der Rauchgasstrom in Rauchgasströmungsrichtung hinter der Einmündung des Bypass-Stroms einer dritten, einen weiteren Teilwärmestrom aus dem Rauchgasstrom auskoppelnden und in ein zum Bereich der Niederdruckvorwärmung des Wasser/Dampf-Kreislaufs strömendes weiteres Wärmeträgermedium einkoppelnden Wärmeübertragungsvorrichtung zugeführt wird, wobei aus dem weiteren Wärmeträgermedium im Bereich der Niederdruckvorwärmung thermische Energie ausgekoppelt und in den Wasser/Dampf-Kreislauf eingekoppelt wird oder wobei das weitere Wärmeträgermedium im Bereich der Niederdruckvorwärmung in den Wasser/Dampf-Kreislauf eingekoppelt wird.

Bei dieser Ausführungsform ist in Rauchgasströmungsrichtung hinter dem Gasvorwärmer in Kombination mit einem nachgeordneten Elektrofilter hier eine dritte Wärmeübertragungsvorrichtung ausgebildet und angeordnet, die in Kombination mit dem Elektrofilter als SO₃-Senke wirkt. In Rauchgasströmungsrichtung hinter der Einmündung des Bypass-Stroms in den Rauchgasstrom und vor einem Elektrofilter ist die dritte Wärmeübertragungsvorrichtung angeordnet. In dieser Wärmeübertragungsvorrichtung wird das Rauchgas bis auf eine Temperatur, die deutlich unter dem Säuretaupunkt, vorzugsweise 20 Kelvin unter dem Säuretaupunkt, liegt, abgekühlt. Um dies zu erreichen, wird die Temperatur dieser dritten Wärmeübertragungsvorrichtung als Wärmeträgermedium zufließenden Wassers derart gewählt, dass die gewünschte Abkühlung des Rauchgases auf die Temperatur unter dem Säuretaupunkt, vorzugsweise von bis zu 20 Kelvin unter dem Säurepunkt, durch einen entsprechenden Wärmestrom an thermischer Energie aus dem Rauchgas und Einkopplung in das Wärmeträgermedium erreicht wird. Das durch Einkopplung dieser thermischen Energie erwärmte Wärmeträgermedium/Wasser wird dann der Niederdruck-Vorwärmung des Wasser/Dampf-Kreislaufes zugeführt, so dass auch an dieser Stelle weiterer Dampf, der ansonsten aus dem Wasser/Dampf-Kreislauf zur Verfügung gestellt werden müsste, eingespart wird. Im Rauchgasstrom kondensiert aufgrund der Unterschreitung des Säuretaupunktes SO₃ an den im Rauchgas enthaltenen Aschepartikeln, die als basische Kondensationskeime wirken. Diese mit SO₃ beladenen Aschepartikel werden dann anschließend im Elektrofilter aus dem Rauchgas entfernt. Die Temperatur des Rauchgases im Bereich der dritten Wärmeübertragungsvorrichtung wird nun einerseits so eingestellt, dass in Rauchgasströmungsrichtung hinter der dritten Wärmeübertragungsvorrichtung die Temperatur auf bis zu 20 Kelvin unter dem Säuretaupunkt herabgekühlt wird, andererseits aber die Rauchgastemperatur an dieser Stelle immer noch ca. 20 Kelvin über dem Wassertaupunkt liegt.

Weiterhin ist bei einer vorgesehenen Beseitigung des CO₂ aus dem Rauchgas einer Rauchgastrocknungsanlage nachgeschaltet gewünschtenfalls eine CO₂-Kompression zur Verflüssigung des CO₂ vorgesehen. In diesem Falle ist es gemäß weiterer Ausgestaltung der Erfindung von Vorteil, dass der Rauchgasstrom einer mehrstufigen CO₂-Kompressionsanlage zugeführt wird, in welcher in Rauchgasströmungsrichtung hinter jeder Druckstufe mittels nachfolgender Wärmeübertragungsvorrichtungen jeweils ein zusätzlicher Teilwärmestrom aus dem Rauchgasstrom ausgekoppelt wird und thermische Energie des jeweiligen zusätzlichen Teilwärmestroms im Bereich der Niederdruck-Vorwärmung in den Wasser/Dampf-Kreislauf eingekoppelt wird. Es ist auch möglich, die dem Rauchgas in der CO₂-Kompressionsanlage entnommene thermische Energie dem Teilstrom vor Eintritt in den Gasvorwärmer zuzuführen, um den Rauchgasstoffstrom im Bypass zu erhöhen und somit die Wärmemenge, die auf das Wärmeträgermedium abgeführt wird, zu erhöhen.

Auch hierdurch lässt sich Wärme rückgewinnen und in den Wasser/Dampf-Kreislauf rückintegrieren. Für die Abwärme in der CO₂-Kompressionsanlage oder CO₂-Purification-Unit wird insbesondere ein zusätzlicher Kühlwasserkreislauf aufgebaut, um den Wasser-/Dampfkreislauf vor Kontamination zu schützen. Das in den dortigen nachfolgenden Wärmeübertragungsvorrichtungen als Wärmeträgermedium erwärmte Kühlwasser wird dem Bereich der Niederdruck-Vorwärmung zugeführt, wo die aus diesem in Wasser/Wasser-Wärmeüberträgern thermische Energie ausgekoppelt - und damit das Kühlwasser abgekühlt - wird, wodurch gleichzeitig diese thermische Energie in dem Wasser/Dampf-Kreislauf im Bereich der Niederdruck-Vorwärmung eingekoppelt wird. Diese Wasser/Wasser-Wärmetauscher sind im Bypass von mehreren Niederdruck-Vorwärmern angeordnet.

Neben der Verwendung der durch die erfindungsgemäße Vorgehensweise eingesparten Dampfmenge oder Dampfmasse entweder zur Erhöhung der Gesamtbruttoleistung und damit des gesamten Wirkungsgrades des Kraftwerkes oder zur Sauerstoffvorwärmung kann dieser Dampf auch zum Antrieb eines Luftverdichters verwendet werden. Die Erfindung zeichnet sich daher schließlich auch dadurch aus, dass eine der Rückintegration thermischer Energie entsprechende Dampfmenge zum Antrieb eines Luftverdichters, insbesondere der Luftzerlegungsanlage, und/oder zur Vorwärmung des rezirkulierten Rauchgas zugemischten Sauerstoffs verwendet wird. Im Rahmen dieser Luftzerlegung zur Abspaltung des Sauerstoffs muss die Luft zunächst verdichtet werden. Dies kann sowohl adiabat als auch isotherm erfolgen. Hierbei kann der eingesparte Dampf zum Antrieb des Luftverdichters verwendet werden. Bei einer adiabaten Luftverdichtung kann der Sauerstoff mittels erwärmter Luft vorgewärmt werden. Bei einer isothermen Verdichtung kann eingesparter Dampf für die Vorwärmung des Sauerstoffs verwendet werden.

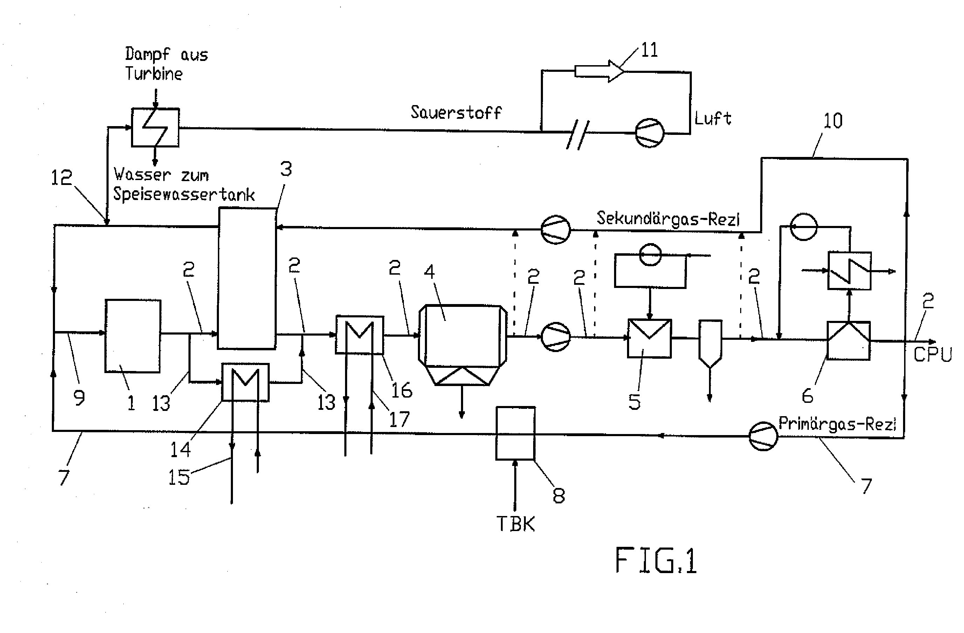

Die Erfindung ist nachstehend anhand der Zeichnung beispielhaft näher erläutert. Dies zeigt in
- Fig. 1: in schematischer Darstellung den Rauchgasrezirkulationskreislauf eines kohlebefeuerten, im Oxyfuel-Betrieb gefahrenen Kraftwerks,
- Fig. 2: in schematischer Darstellung eine dem Rauchgasrezirkulationskreislauf gemäß Fig. 1 nachgeschaltete CO₂-Kompressionsanlage zur CO₂-Verflüssigung und in
- Fig. 3: in schematischer Darstellung eine alternative Sauerstoff-Vorwärmung.

Die zur Durchführung des erfindungsgemäßen Verfahrens vorgesehene Anlage weist einen mit Trockenbraunkohle TBK oder Steinkohle befeuerten Dampfkessel 1 eines Kraftwerks auf, welcher im Oxyfuel-Betrieb gefahren wird. Das Rauchgas verlässt den Dampfkessel 1 längs des Rauchgasweges 2. In diesem Rauchgasweg 2 sind in Strömungsrichtung aufeinanderfolgend ein Gasvorwärmer 3, ein Elektrofilter 4, eine Rauchgasentschwefelungsanlage 5 und eine Rauchgastrocknungsanlage 6, insbesondere ein Rauchgaskühler, angeordnet. Im Ausführungsbeispiel hinter der Rauchgastrocknungsanlage 6 zweigt von dem längs des Rauchgasweges 2 strömenden Rauchgasstrom ein erster, kohlenstoffhaltigen Brennstoff aufnehmender Teilstrom 7 als so genannter Primärgasrezirkulationsteilstrom ab. In einer schematisch dargestellten und mit 8 bezeichneten Vorrichtung nimmt der erste Teilstrom 7 Kohle als kohlenstoffhaltigen Brennstoff auf und wird dann bei 9 den Brennern des Kessels 1 zugeführt. Ein zweiter Teilstrom 10, ein so genannter Sekundärgasrezirkulationsteilstrom zweigt ebenfalls hinter der Rauchgastrocknungsanlage 6 vom Rauchgasstrom ab und wird unter Durchströmen des Gasvorwärmers 3 ebenfalls bei 9 den Brennern des Dampfkessels 1 zugeführt. In Strömungsrichtung hinter dem Gasvorwärmer 3 und vor dem Eintritt in den Dampfkessel 1 wird in den zweiten Teilstrom 10 aus einer Luftzerlegungsanlage 11 stammender Sauerstoff bei 12 dem zweiten Teilstrom 10 zugemischt.

In Strömungsrichtung des Rauchgasstromes vor dem Gasvorwärmer 3 zweigt von dem Rauchgasweg 2 ein Bypass-Strom 13 ab, der in Rauchgasströmungsrichtung hinter dem Gasvorwärmer 3 wieder in den Rauchgasweg 2 einmündet. Im Bypassstrom 13 ist eine zweite Wärmeübertragungsvorrichtung angeordnet, die von dem Bypass-Strom durchströmt wird. In der zweiten Wärmeübertragungsvorrichtung 14 ist zudem ein Wärmeträgermedium, im vorliegenden Fall Wasser 15 geführt, das in der zweiten Wärmeübertragungsvorrichtung 14 thermische Energie im Wege der Auskopplung aus dem Bypass-Strom und Einkopplung in den Wärmeträgermediumstrom 15 aufnimmt. Das hier erwärmte Wärmeträgermedium 15 wird der Hochdruckvorwärmung des Wasser/Dampf-Kreislaufes des dem Kessel 1 zugeordneten Kraftwerks zugeführt. Im Bereich der Hochdruckvorerwärmung wird die im Wärmeträgermedium 15 befindliche thermische Energie in den Wasser/Dampf-Kreislauf eingekoppelt. Das dem zweiten Wärmeübertragungsvorrichtung 4 zufließende Wärmeträgermedium 15 wird dem Wasser/Dampf-Kreislauf in dessen Strömungsrichtung hinter der Speisewasserpumpe entnommen.

In Rauchgasströmungsrichtung hinter der Einmündung des Bypass-Stroms in den Rauchgasweg 2 ist in diesem eine dritte Wärmeübertragungsvorrichtung 16 angeordnet. Diese wirkt durch die weiter oben beschriebene Abkühlung des Rauchgasstromes auf eine Temperatur unterhalb des Säuretaupunktes im Zusammenwirken mit dem nachgeschalteten Elektrofilter 4 als SO₃-Senke. Der dritten Wärmeübertragungsvorrichtung wird als Wärmeträgermedium 17 ebenfalls Wasser zugeführt, in das mittels der dritten Wärmeübertragungsvorrichtung aus dem Rauchgasstrom ausgekoppelte thermische Energie eingekoppelt wird. Von der dritten Wärmeübertragungsvorrichtung aus wird das Wärmeträgermedium 17 der Niederdruckvorwärmung des Wasser/Dampf-Kreislaufes zugeführt. Aus diesem Bereich wird das Wasser auch der dritten Wärmeübertragungsvorrichtung zur Aufnahme von thermischer Energie zugeführt.

In gestrichelter Darstellung sind auch andere Möglichkeiten der Abzweigung des zweiten Teilstromes 10 vom Rauchgasweg 2 angedeutet, die je nach Verfahrensführung gegebenenfalls verwendet werden können.

In nicht dargestellter Weise kann in Rauchgasströmungsrichtung hinter dem Elektrofilter 4 und vor dem darauf folgenden Saugzuggebläse auch eine Eindüsung von CaCO₃ in den Rauchgasstrom mit einer nachfolgenden SO₃-Entfernung vorgesehen sein.

In einer nicht weiter dargestellten Weise kann der Sauerstoff auch in den Teilstrom 7 zugemischt werden. Des Weiteren ist auch die Vorwärmung von Teilstrom 7 im Gasvorwärmer 3 möglich, die hier ebenfalls nicht dargestellt ist.

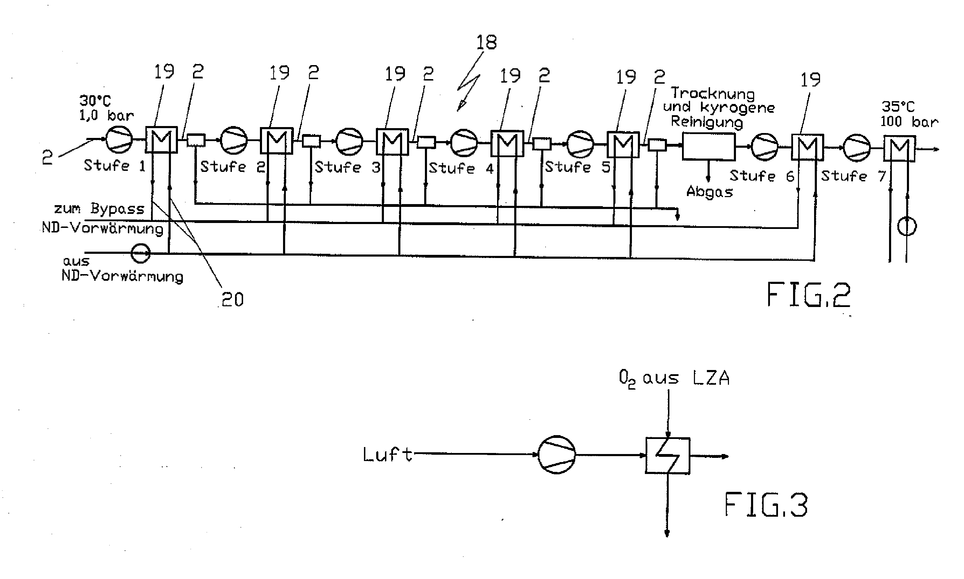

Die Fig. 2 zeigt die insgesamt mit 18 bezeichnete, insgesamt siebenstufige CO₂-Kompression. Hier sind jeder Stufe zu und nachgeordnet jeweils nachfolgende Wärmeübertragungsvorrichtungen 19 in dem Rauchgasweg 2 angeordnet. Zur Ein- und Auskopplung thermischer Energie werden diese nachfolgenden Wärmeübertragungsvorrichtungen 19 von Wasser 20 als Wärmeträgermedium durchflossen, welches von den nachfolgenden Wärmeübertragungsvorrichtungen zur Niederdruck-Vorwärmung des Wasser/Dampf-Kreislaufes zugeführt und von dort wieder zu den nachfolgenden Wärmeübertragungsvorrichtungen rückgeführt wird. Beispielsweise ist es möglich, die dem Rauchgas in 18 entnommene thermische Energie dem Teilstrom 10 vor Eintritt in den Gasvorwärmer 3 zuzuführen, um den Rauchgasstoffstrom im Bypass 13 zu erhöhen und somit die Wärmemenge, die auf das Wärmeträgermedium 15 abgeführt wird, zu erhöhen.

Die Fig. 3 zeigt eine alternative Sauerstoff-Vorwärmung bei adiabater Luftverdichtung. Die durch die Kompression erzeugte Wärme wird zur Vorwärmung des in der Luftzerlegungsanlage 11 produzierten O₂ verwendet. Es ist aber auch möglich eine hier nicht gezeigte Sauerstoff-Vorwärmung bei isothermer Luftverdichtung vorzusehen. Bei einer isothermen Luftverdichtung kann eingesparter Dampf für die Vorwärmung des Sauerstoffs verwendet werden.

## Patentansprüche

1. Verfahren zur Rückintegration von aus dem Rauchgasstrom (2) eines mit kohlenstoffhaltigem Brennstoff, insbesondere Trockenbraunkohle oder Steinkohle, befeuerten und im Oxyfuel-Betrieb gefahrenen Dampfkessels (1) eines Kraftwerks gewonnener thermischer Energie in den Wasser/Dampf-Kreislauf des Kraftwerks, wobei aus dem Rauchgasstrom ein erster, den kohlenstoffhaltigen Brennstoff aufnehmender Teilstrom (7) abgezweigt und zu den Brennern des Dampfkessels rezirkuliert wird und ein zweiter Teilstrom (10) abgezweigt und unter Durchströmen einer vorzugsweise im Gegenstrom von zumindest Teilen des Rauchgasstroms durchströmten Wärmeübertragungsvorrichtung (3) zu den Brennern des Dampfkessels rezirkuliert wird, **dadurch gekennzeichnet,**
**dass** aus dem Rauchgasstrom (2) und/oder einem Teilstrom (13) des Rauchgasstroms thermische Energie in Form eines Teilwärmestroms ausgekoppelt und im Bereich der Hochdruckvorwärmung und/oder der Niederdruckvorwärmung in den Wasser/Dampf-Kreislauf des Kraftwerks eingekoppelt wird.

2. Verfahren nach Anspruch 1, **dadurch gekennzeichnet, dass** von dem Rauchgasstrom ein die Wärmeübertragungsvorrichtung (3) umströmender und in Strömungsrichtung des Rauchgases hinter der Wärmeübertragungsvorrichtung wieder in den Rauchgasstrom (2) einmündender Bypass-Strom (13) abgezweigt wird, wobei der Bypass-Strom eine zweite Wärmeübertragungsvorrichtung (14) durchströmt, mittels welcher der Teilstrom thermischer Energie aus dem Bypass-Strom ausgekoppelt und in ein Wärmeträgermedium (15) eingekoppelt wird, das dem Bereich der Hochdruckvorwärmung des Wasser/Dampf-Kreislaufs zugeführt wird und dort direkt in den Wasser/Dampf-Kreislauf eingekoppelt wird oder wobei dort thermische Energie aus dem Wärmeträgermedium ausgekoppelt und in den Wasser/Dampf-Kreislauf eingekoppelt wird.

3. Verfahren nach Anspruch 1 oder 2, **dadurch gekennzeichnet, dass** der Rauchgasstrom in Rauchgasströmungsrichtung hinter der Einmündung des Bypass-Stroms einer dritten, einen weiteren Teilwärmestrom aus dem Rauchgasstrom auskoppelnden und in ein zum Bereich der Niederdruckvorwärmung des Wasser/Dampf-Kreislaufes strömendes weiteres Wärmeträgermedium (17) einkoppelnden Wärmeübertragungsvorrichtung (16) zugeführt wird, wobei aus dem weiteren Wärmeträgermedium im Bereich der Niederdruckvorwärmung thermische Energie ausgekoppelt und in den Wasser/Dampf-Kreislauf eingekoppelt wird oder wobei das weitere Wärmeträgermedium im Bereich der Niederdruckvorwärmung in den Wasser/Dampf-Kreislauf eingekoppelt wird.

4. Verfahren nach einem der vorhergehenden Ansprüche, **dadurch gekennzeichnet, dass** der Rauchgasstrom einer mehrstufigen CO₂-Kompressionsanlage (18) zugeführt wird, in welcher in Rauchgasströmungsrichtung hinter jeder Druckstufe mittels nachfolgender Wärmeübertragungsvorrichtungen (19) jeweils ein zusätzlicher Teilwärmestrom aus dem Rauchgasstrom ausgekoppelt wird und thermische Energie des jeweiligen zusätzlichen Teilwärmestroms im Bereich der Niederdruck-Vorwärmung in den Wasser/Dampf-Kreislauf eingekoppelt wird.

5. Verfahren nach einem der vorhergehenden Ansprüche, **dadurch gekennzeichnet, dass** eine der Rückintegration thermischer Energie entsprechende Dampfmenge zum Antrieb eines Luftverdichters, insbesondere der Luftzerlegungsanlage (11) und/oder zur Vorwärmung des rezirkuliertem Rauchgas zugemischten Sauerstoffs verwendet wird.
